# EUROPEAN PATENT SPECIFICATION

(11) **EP 3 475 101 B1**
(45) Date of publication and mention of the grant of the patent: **03.06.2020**
(21) Application number: 17736775.2
(22) Date of filing: 22.06.2017
(51) Int. Cl.: B60C 1/00, B60C 11/00, B60C 11/11

(54) **A TIRE COMPRISING A TREAD**
REIFEN MIT EINER LAUFFLÄCHE
PNEUMATIQUE COMPRENANT UNE BANDE DE ROULEMENT

(30) Priority: 22.06.2016 WO PCT/JP2016/003012
(43) Date of publication of application: 01.05.2019
(73) Proprietor: Compagnie Générale des Etablissements Michelin, 63000 Clermont-Ferrand (FR)
(72) Inventor: DOTSON Michael Edward, Tokyo 163-1073 (JP)
(74) Representative: Regimbeau
(86) International application number: PCT/JP2017/022952
(87) International publication number: WO 2017/222005

(56) References cited:
- DE-A1-102012 214 485
- JP-A- 2008 030 635

## Description

### Technical Field

This invention relates to tires having treads suitable for "winter tires" (also known as studless tires) without being provided with studs capable of rolling over ground surfaces covered with ice or black ice.

It relates more particularly to treads for winter tires specifically suited to rolling under "melting ice" conditions under a temperature range of typically between -5°C and 0°C.

### Background Art

Within such a range, the pressure of the tires during the passage of a vehicle brings about surface melting of the ice, which is covered with a thin layer of water harmful to the grip of these tires.

In order to improve the grip on the melting ice, tire manufacturers have provided different solutions related to the tires having the treads provided with incisions (grooves and/or sipe), which can absorb and/or store the harmful water.

### Citation List

### Patent Literature

PTL 1: JPH09-202116
PTL 2: JP2008-30635

A solution is a tire having a tread provided with groove(s), and a layered fiber chip having water expansion property, the fiber layer chip fixed on wall surface(s) of the groove(s) (Patent literature 1).

Another is a tire having a tread comprising a plurality of blocks provided with at least an incision whose wall surface is at least partially covered with a hydrophilic membrane (Patent literature 2).

However, the above both solutions requires to prepare the additional attachments, such as the fiber layer chip and the hydrophilic membrane, and to put them on the wall surfaces of the incisions, and therefore the production of tires may occur cost increases, and the process of production may be relatively complicated.

### Summary of Invention

### Technical Problem

Now, on continuing their researches, the applicants have discovered as a new solution a tire having a novel and specific tread, which can efficiently absorb and store the harmful water during the rolling of the tire so that it is made possible to achieve the above objective, that is to say to improve the grip on melting ice.

As a tire has a geometry of revolution about an axis of rotation, the geometry of the tire is generally described in a meridian plane containing the axis of rotation of the tire, and the following definitions of directions of the tire are understood in the present application:
- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" means "in the circumferential or axial direction".

Moreover, any interval of values denoted by the expression "between a and b" represents the range of values of greater than "a" and of less than "b" (i.e. the limits a and b excluded) Whereas any interval of values denoted by the expression "from a to b" means the range of values going from "a" to "b" (i.e. including the strict limits a and b). The abbreviation "phr" signifies parts by weight per hundred parts of elastomer or rubber (of the total of the elastomers if several elastomers are present).

In the present description, unless expressly indicated otherwise, each Tg (glass transition temperature) is measured in a known way by DSC (Differential Scanning Calorimetry) according to Standard ASTM D3418-08.

### Solution to Problem

A first aspect of the invention is a tire (1) which has a tread (2) having a contact surface (3) intended to come into contact with ground during rolling, the tread (2) comprising one or more of main grooves (4) circumferentially extending, a plurality of sub grooves (5) axially extending, and a plurality of blocks (6) delimited by the main grooves (4) and the sub grooves (5), the blocks (6) respectively having a top face (7) forming the contact surface (3) of the tread (2), two frontal faces (8, 9) axially extending and respectively facing to one of the sub grooves (5), and two lateral faces (10, 11) circumferentially extending and respectively facing to one of the main grooves (4), the blocks (6) also having a block width (BW), a block length (BL) and a block height (BH), the blocks (6) respectively provided with one or more of incisions (12, 13, 14, 15), the tire, being characterized in that: each of the blocks (6) comprises surface layer A extending along the top face (7), and surface layer B extending along at least a wall face laterally facing to each of the incisions (12, 13, 14, 15), each of the atomic percentages of oxygen and halogen atoms in the surface layer B is higher than those in the surface layer A, as measured by XPS (X-ray photoelectron spectroscopy), the atomic percentages being based on the total amount of carbon, nitrogen, oxygen, sulphur, halogen and silica atoms.

### Advantageous Effects of Invention

Each of the atomic percentages of oxygen and halogen atoms in the surface layer B is greater than those in the surface layer A, that is, the surface layer B has higher polarity than that of the surface layer A. Thus, the surface layer B is relatively hydrophilic, which helps the incisions to efficiently absorb and store the harmful water during the rolling of the tire, and which makes it possible to improve the grip on melting ice.

A second aspect of the invention is the tire (1) according to the first aspect, wherein the atomic percentage of oxygen in the surface layer B is higher than that in the surface layer A by more than 2.0% (preferably, more than 4.0%, more preferably, equal to or more than 6.0%, still more preferably, from 6.0 to 8.0%), and the atomic percentage of halogen atom(s) in the surface layer B is higher than that in the surface layer A by more than 1.0% (preferably, more than 2.0%, more preferably, equal to or more than 3.0%, still more preferably, equal to or more than 4.0%, particularly, from 4.0 to 7.0%).

A third aspect of the invention is the tire (1) according to the second aspect, wherein the atomic percentage of oxygen in the surface layer B is higher than 6.0% (preferably, higher than 8.0%, more preferably, equal to or higher than 10.0%, still more preferably, from 10.0 to 15.0%), and the atomic percentage of halogen atom(s) in the surface layer B is higher than 3.0% (preferably, higher than 4.0%, more preferably, equal to or higher than 5.0%, still more preferably, from 5.0 to 6.0%).

The surface layer B exhibiting these ranges may more effectively help the incisions to absorb and store the harmful water during the rolling of the tire.

A fourth aspect of the invention is the tire (1) according to any one of the first to the third aspects, wherein the atomic percentage of nitrogen in the surface layer B is higher than that in the surface layer A by more than 1.0% (preferably, more than 2.0%, more preferably, equal to or more than 3.0%, notably, from 3.0% to 6.0%).

A fifth aspect of the invention is the tire (1) according to the fourth aspect, wherein the atomic percentage of nitrogen in the surface layer B is higher than 1.5% (more particularly, higher than 2.5%, still more particularly, equal to or higher than 3.5%, notably, from 3.5% to 5.5%).

The surface layer B exhibiting these ranges may still more effectively help the incisions to absorb and store the harmful water during the rolling of the tire.

A sixth aspect of the invention is the tire (1) according to any one of the first to the fifth aspects, wherein the incisions (12, 13, 14, 15) include one or more of the incisions (12, 13, 14, 15) respectively extending to form opening(s) to the sub groove(s) (5) at the frontal face(s) (8, 9) or to the main groove(s) (4) at the lateral face(s) (10, 11), and wherein each of the opening(s) has an opening width (w).

That means the incisions (12, 13, 14, 15) include one or more of the incisions (12, 13, 14, 15) opening to at least one grooves selected among the main groove(s) (4) and the sub groove(s) (5). The incisions (12, 13, 14, 15) have a depth (d) extending along the direction in which the incisions (12, 13, 14, 15) extend and a height (h) extending in radial direction. Preferably, a ratio of the height (h) of the incisions (12, 13, 14, 15) to the block height (BH) is more than 50% (notably more than 50% and up to 100%), more preferably, from 70% to 100% (notably more than 70% and up to 100%), still more preferably from 90% to 100% (notably more than 90% and up to 100%), advantageously equal to 100%.

The harmful water, which may be absorbed and stored by the incision(s) once, may be drained from the opening to the main groove(s) or the sub groove(s), which makes it possible to more effectively improve the grip on the melting ice.

A seventh aspect of the invention is the tire (1) according to the sixth aspect, wherein the incisions (12, 13, 14, 15) include one or more of the incisions (12) axially extending to be open at both of the lateral faces (10, 11).

The incisions (12), which are both side open incisions, make it possible to more effectively improve the grip on the melting ice.

An eighth aspect of the invention is the tire (1) according to the sixth aspect, wherein the incisions (12, 13, 14, 15) include a plurality of the incisions (13) circumferentially extending to be open to one of the sub grooves (5) at one or both, preferably both, of the frontal faces (8, 9), and wherein a ratio of the sum of the opening widths (w) of the incisions (13) on each of the frontal faces (8, 9) to the block width (BW) is between 10% and 60%, preferably, between 15% and 50%, more preferably, between 20% and 40%, still more preferably, between 30% and 40%. Particularly, a ratio of depth (d) of the incisions (13) to the block length (BL) is between 0% and 30%, more particularly, between 1% and 20%, still more particularly, between 2% and 10%, notably between 3% and 5%.

The incisions (13), which are one side open incisions, make it possible to more effectively improve the grip on the melting ice, especially for acceleration and/or braking on straightly traveling.

Below the indicated minimum ratios, there is a risk to that the effect produced by the incisions will fade, whereas above the recommended maximum ratios, there is a risk to decrease rigidity of each of the blocks in the axial direction or the circumferential direction, which may affect stability performance of the tire.

A ninth aspect of the invention is the tire (1) according to the eighth aspect, wherein the incisions (12, 13, 14, 15) include one or more of additional incisions (12) axially extending to be open at both of the lateral faces (10, 11).

The additional incisions (12), which are both side open incisions, may reinforce improvement of the grip on the melting ice.

A tenth aspect of the invention is the tire (1) according to the ninth aspect, wherein the incisions (12, 13, 14, 15) include a plurality of the incisions (14) circumferentially extending to be open to one of the additional incisions (12) at one of wall faces of the additional incisions (12). Preferably, a ratio of the sum of the opening widths (w) of the incisions (14) circumferentially extending to be open to one of wall faces of the additional incisions (12) axially extending to be open at both of the lateral faces (10, 11) to the block width (BW) is between 10% and 60%, preferably, between 15% and 50%, more preferably, between 20% and 40%, still more preferably, between 30% and 40%. Particularly, a ratio of depth (d) of the incisions (14) to the block length (BL) is between 0% and 30%, more particularly, between 1% and 20%, still more particularly, between 2% and 10%, notably between 3 and 5%.

The incisions (14), which are one side open incisions, make it possible to more effectively improve the grip on the melting ice, especially for acceleration and/or braking on straightly traveling.

Below the indicated minimum ratios, there is a risk to that the effect produced by the incisions will fade, whereas above the recommended maximum ratios, there is a risk to decrease rigidity of each of the blocks in the axial direction or the circumferential direction, which may affect stability performance of the tire.

An eleventh aspect of the invention is the tire (1) according to the tenth aspect, wherein the incisions (12, 13, 14, 15) include a plurality of the incisions (15) at one or both, preferably both, of the lateral faces (10, 11), the incisions (15) axially extending to be open at one of the lateral faces (10, 11), and preferably, a ratio of the sum of the opening widths (w) of the incisions (15) axially extending to be open at one of the lateral faces (10, 11) to the block length (BL) is between 10% and 60%, preferably, between 15% and 50%, more preferably, between 20% and 40%. Particularly, a ratio of depth (d) of the incisions (15) to the block width (BW) is between 0% and 30%, more particularly, between 1% and 20%, still more particularly, between 2% and 10%, notably between 3% and 5%.

The incisions (15), which are one side open incisions, may further reinforce improvement of the grip on the melting ice, especially when turning.

Below the indicated minimum ratios, there is a risk to that the effect produced by the incisions will fade, whereas above the recommended maximum ratios, there is a risk to decrease rigidity of each of the blocks in the circumferential direction or the axial direction, which affect dry grip performance of the tire.

A twelfth aspect of the invention is the tire (1) according to any one of the sixth to the eleventh aspects, wherein the opening width (w) is between 0.1 and 3.0 mm, preferably, between 0.2 and 2.5 mm, more preferably, between 0.3 and 2.0 mm, more preferably, from 0.4 to 1.5 mm.

Below the indicated minimum or maximum, there is a risk to that the effect produced by the incisions will fade due to decrease of volume or capillarity of the incisions.

A thirteenth aspect of the invention is the tire (1) according to any one of the first to the twelfth aspects, wherein the surface layer B has a thickness which is from 1 nm to 10 nm, preferably from 2 nm to 8 nm, more preferably from 4 nm to 5 nm.

A fourteenth aspect of the invention is the tire (1) according to any one of the first to the thirteenth aspects, wherein each of the blocks (6) comprises the surface layer B oxidated and halogenated (preferably chlorinated, brominated and/or iodinated, more preferably chlorinated and/or brominated, still more preferably chlorinated), particularly nitrided.

The surface layer B oxidated and halogenated, particularly nitrided, is likely to be hydrophilic, which may effectively support the incisions (12, 13, 14, 15) to drain the harmful water, and which makes it possible to improve the grip on melting ice.

A fifteenth aspect of the invention is the tire (1) according to the fourteenth aspect, wherein the surface layer A consists of a rubber composition, and wherein the surface layer B consists of the rubber composition before oxidation and halogenation, preferably selected from the group consisting of chlorination, bromination, iodination and the mixtures thereof, more preferably selected from the group consisting of chlorination, bromination and the mixtures thereof, still more preferably chlorination, particularly further nitridation, of the surface layer B.

A sixteenth aspect of the invention is the tire (1) according to the fifteenth aspect, wherein each of the blocks (6) consists of the rubber composition before the oxidation and the halogenation of the surface layer B.

The surface layer B may consist of the rubber composition which is same as that of the surface layer A, preferably each of the blocks (6), before such treatment, which can make it unnecessary to attach any additional equipment, for example, fiber layer chip or hydrophilic membrane.

A seventeenth aspect of the invention is the tire (1) according to the fifteenth aspect or the sixteenth one, wherein the rubber composition comprises at least a diene elastomer and a reinforcing filler.

The diene elastomer is generally understood to mean an elastomer resulting at least in part (i.e. a homopolymer or a copolymer) from diene monomers (monomers bearing two carbon-carbon double bonds which may or may not be conjugated).

The diene elastomer is preferably selected from the group consisting of natural rubber, synthetic polyisoprenes, polybutadienes, butadiene copolymers, isoprene copolymers and the mixtures thereof. Such copolymers are more preferably selected from the group consisting of butadiene/styrene copolymers (SBRs), isoprene/butadiene copolymers (BIRs), isoprene/styrene copolymers (SIRs), isoprene/butadiene/styrene copolymers (SBIRs) and mixtures thereof.

The rubber composition may contain a single diene elastomer or a mixture of several diene elastomers, it is possible for the diene elastomer(s) to be used in combination with any type of synthetic elastomer other than a diene elastomer, or even with polymers other than elastomers, for example thermoplastic polymers.

The reinforcing filler is preferably selected from the group consisting of carbon black, inorganic filler and the mixture thereof.

All carbon blacks, especially blacks of the HAF, ISAF or SAF type, conventionally used in tires are suitable as carbon blacks. As non-limiting examples of such blacks, mention may be made of the N115, N134, N234, N330, N339, N347 and N375 blacks.

Such inorganic filler comprises silica, especially highly dispersible silicas, for example the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol 8715, 8745 and 8755 silicas from Huber.

As other examples of inorganic filler that can be used in the rubber composition, mention will also be made of mineral fillers of the aluminous type, in particular alumina (Al₂O₃), or aluminium (oxide) hydroxides, or else reinforcing titanium oxides, for example described in WO 99/28376 (US 6 610 261) and WO 00/73372 (US 6 747 087).

A person skilled in the art will understand that, as filler equivalent to the reinforcing inorganic filler described in the present section, a reinforcing filler of another nature, in particular organic nature, could be used, provided that this reinforcing filler is covered with an inorganic layer, such as silica, or else comprises functional sites, in particular hydroxyl sites, at its surface that require the use of a coupling agent in order to form the bond between the filler and the elastomer.

The rubber composition may also comprise all or some of the standard additives customarily used in the elastomer compositions intended for the manufacture of tires, such as for example plasticizer system selected from the group consisting of liquid plasticizer, hydrocarbon resin and the mixture thereof, pigments, protective agents, such as antiozone waxes, chemical antiozonants, antioxidants, antifatigue agents, reinforcing resins, methylene acceptors (for example phenolic novolac resin) or methylene donors (for example HMT or H3M), a crosslinking system based either on sulphur or on donors of sulphur and/or per oxide and/or bismaleimides, vulcanization accelerators, or vulcanization activators.

An eighteenth aspect of the invention is the tire (1) according to any one of the first to seventeenth aspects, wherein the halogen atom(s) are selected from the group consisting of chlorine, bromine, iodine and the mixtures thereof, preferably selected from the group consisting of chlorine, bromine and the mixtures thereof, are more preferably chlorine.

### Brief Description of Drawings

Other characteristics and advantages of the invention arise from the description made hereafter in reference to the annexed drawings which show, as nonrestrictive examples, embodiments of the object of the invention.

In these drawings:
[fig.1]FIG. 1 shows a schematic view of a tire cross sectional view according to the present invention;
[fig.2]FIG. 2 shows a plan view of a tread according to the present invention;
[fig.3]FIG. 3 shows a schematic view of a block of a first embodiment;
[fig.4]FIG. 4 shows a plan view of a block of the first embodiment;
[fig.5]FIG. 5 shows a schematic view of a block of a second embodiment;
[fig.6]FIG. 6 shows a plan view of a block of the second embodiment;
[fig.7]FIG. 7 shows a plan view of a block of a third embodiment;
[fig.8]FIG. 8 shows a plan view of a block of a fourth embodiment;
[fig.9]FIG. 9 shows a plan view of a block of a fifth embodiment.

### Description of Embodiments

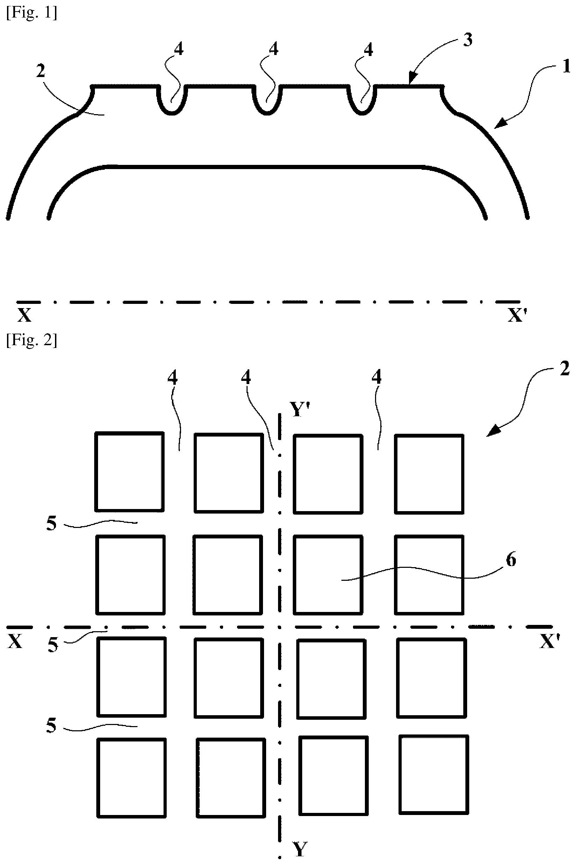

The appended FIG. 1 schematically (in particular not to a specific scale) represents, in radial cross section, a tire (1) according to the present invention.

The tires of the invention are particularly intended to be equipped to passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers)).

In the FIG. 1, the tire (1) has a tread (2) having a contact surface (3) intended to come into contact with ground during rolling, the tread (2) comprising main grooves (4) circumferentially extending.

The FIG. 2 illustrates the tread (2) which comprises the main grooves (4) circumferentially (in the circumferential direction (Y-Y')) extending, sub grooves (5) axially (in the axial direction (X-X')) extending, and a plurality of blocks (6) delimited by the circumferential main grooves (4) and the sub grooves (5).

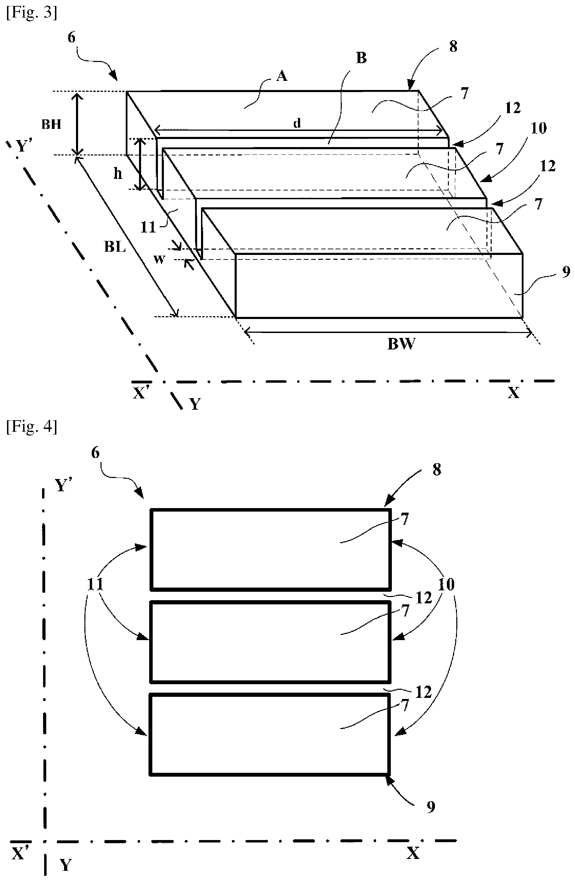

The FIGs. 3 to 9 illustrate the block (6) which has a top face (7) forming the contact surface of the tread, two frontal faces (8, 9) axially extending and respectively facing to one of the sub grooves, and two lateral faces (10, 11) circumferentially extending and respectively facing to one of the main grooves, the block (6) provided with a plurality of incisions (12, 13, 14, 15), wherein each of the blocks (6) comprises surface layer A extending along the top face (7) and having a thickness perpendicular to the top face (7), and surface layer B extending along at least a wall face laterally facing to each of the incisions (12, 13, 14, 15), and having a thickness perpendicular to the wall face, and wherein each of the atomic percentages of oxygen and halogen atoms in the surface layer B is higher than those in the surface layer A, as measured by XPS (X-ray photoelectron spectroscopy), the atomic percentages being based on the total amount of carbon, nitrogen, oxygen, sulphur, halogen and silica atoms. The surface layer B preferably further includes the portion of the block (6) at the radially bottom of the incisions (12, 13, 14, 15).

The surface layer A is an outermost layer having a thickness from the top face in a direction perpendicular to the top face, while the surface layer B is another outermost layer having the thickness from a wall face facing to each of the incisions in a direction perpendicular to the wall face, which are measured by XPS.

More specifically, the thickness of surface layer B (and also surface layer A) is about 1 nm to several nanometers (for instance, 10 nm), notably 2 nm to 8 nm, more notably 4 nm to 5 nm, through which photoelectrons generated by irradiation of the each face with an X-ray are released.

XPS (X-ray photoelectron spectroscopy) is known by a person skilled in the art, in a molecule art field, since the energy of the electrons of an atom are influenced by neighbors of the atom, this measurement can differentiate various atoms which belong to one and the same element but are not involved in one and the same chemical function. Thus, the energies corresponding to the various atoms of samples make it possible, from XPS spectra, to measure the atomic percentages of the various elements, which are known from the following documents(S. Petit-Boileau. Doctoral thesis of the Universito Pierre et Marie Curie (2003); M. Asandulesa, I. Topala, V. Pohoata, N. Dumitrascu. J. Appl. Phys. 108 (2010) 093310; N. K. Cuong, N. Saeki, S. Kataoka, S. Yoshikawa. Hyomen Kagaru (J. of The Surface Science Society ofTapan) 23 (2002) 202-208; H. Krump, I. Hudec, M.lasso, E. Dayss, A. S. Luyt. Applied Surface Science 252 (2006) 4264-4278 and M. Lejeune, F. Bretagnol, G. Ceccone, P. Colpo, F. Rossi. Surface & Coatings Technology 200(2006) 5902-5907).

An area of each peak corresponds to the atomic percentage of each atom which is associated therewith. For example, when the area of the peaks associated with the two types of oxygen atom (C=O and C-O of the ester function) are measured, these peaks associated with the oxygen atoms of the C-O bond and C=O bond are between 530 and 536 eV. As another example, when the area of the peaks corresponding to the three types of carbon atom (benzene carbons, C=O and carbon from the ester chain) is measured, these peaks associated with the carbon atoms of the O=C-O bond, the C-O bond, the C-C and C-H bonds are between 280 and 292 eV.

The atomic percentage of the peaks associated with each atom (for instance, oxygen atom) is calculated by taking the ratio of the area of the peaks associated with all target atoms (for instance, carbon, nitrogen, oxygen, sulphur, halogen and silica atoms) of the spectrum. The areas used for the calculation of the ratio are the Scofield cross sections. The baselines used for the numerical simulation are of Shirley type. After acquisition, the curves are preferably rectified.

The surface layer B exhibits higher each of atomic percentages of oxygen and halogen atoms than that in the surface A, which may be obtained by virtue of suitable treatment, for example, oxidation and halogenation treatment on the wall faces to each of the incisions (12, 13, 14, 15), and optionally on the radial, circumferential or axial bottom of each of the incisions (12, 13, 14, 15), which may make some carbon atom(s) thereon react with oxygen and/or halogen atom(s).

According to a preferred embodiment, each of the blocks (6) comprises the surface layer B oxidated and halogenated (preferably chlorinated, brominated and/or iodinated, more preferably chlorinated and/or brominated, still more preferably chlorinated), particularly nitrided, on the wall faces to each of the incisions (12, 13, 14, 15) by depositing a functional agent thereon. The functional agent(s) is in a solution.

According to a more preferred embodiment, the surface layer A consists of a rubber composition, and the surface layer B also consists of the rubber composition which is same as that of the surface layer A, preferably each of the blocks (6) consists of the rubber composition which is same as that of the surface layers A and B, before oxidation and halogenation (particularly selected from the group consisting of chlorination, bromination, iodination and the mixtures thereof, more particularly selected from the group consisting of chlorination, bromination and the mixtures thereof, still more particularly chlorination), especially further nitridation, of the surface layer B. Advantageously, after the oxidation and the halogenation, the diene elastomer(s) in the rubber composition of the surface layer B is functionalized with oxygen and halogen atoms (notably selected from the group consisting of chlorine, bromine, iodine and the mixtures thereof, more notably selected from the group consisting of chlorine, bromine and the mixtures thereof, still more notably chlorine), specially further nitrogen atom(s).

According to a still more preferred embodiment, the above mentioned functionalizing agent is metallic salt(s) of hypohalogenous acid(s) added to hydrohalic acid(s). Preferably metal(s) of the metallic salt(s) is selected from alkali metal, alkaline earth metal and the mixtures thereof, more preferably selected from the group consisting of sodium, potassium, calcium and the mixtures thereof. Preferably, the hypohalogenous acid(s) is selected from the group consisting of hypochlorous acid, hypobromous acid, hypoiodous acid, and the mixtures thereof, more preferably, selected from the group consisting of hypochlorous acid, hypobromous acid, and the mixtures thereof, still more preferably, is hypochlorous acid. Preferably, the hydrohalic acid(s) is selected from the group consisting of hydrochloric acid, hydrobromic acid, hydroiodic acid and the mixtures thereof, more preferably, selected from the group consisting of hydrochloric acid, hydrobromic acid, and the mixtures thereof, still more preferably, is hydrochloric acid. The functionalizing agent(s) is in a solvent such as water.

According to another still more preferred embodiment, the above mentioned functionalizing agent is selected from the group consisting of trichloroisocyanuric acid (TCCA), tribromocisocyanuric acid, (TBCA), triiodoisocyanuric acid (TICA), n-chlorosuccinmide (NCS), n-bromosuccinimide (NBS), n-iodosuccinimide (NIS) and the mixtures thereof, preferably selected from the group consisting of trichloroisocyanuric acid (TCCA), tribromocisocyanuric acid, (TBCA), n-chlorosuccinmide (NCS), n-bromosuccinimide (NBS) and the mixtures thereof, more preferably, trichloroisocyanuric acid (TCCA), n-chlorosuccinmide (NCS), and the mixtures thereof, still more preferably, trichloroisocyanuric acid (TCCA). The functionalizing agent(s) is in an anhydrous solvent such as ethyl acetate.

The concentration of the functionalizing agents in the solution may be from 1 to 5 % by weight per 100% by weight of the solution, and both of the mentioned solvents, which are water and ethyl acetate, have the advantage of readily evaporating thereafter.

After depositing the functional agent, the wall surface may or may not be cleaned with a mixed solvent of water and ethyl acetate.

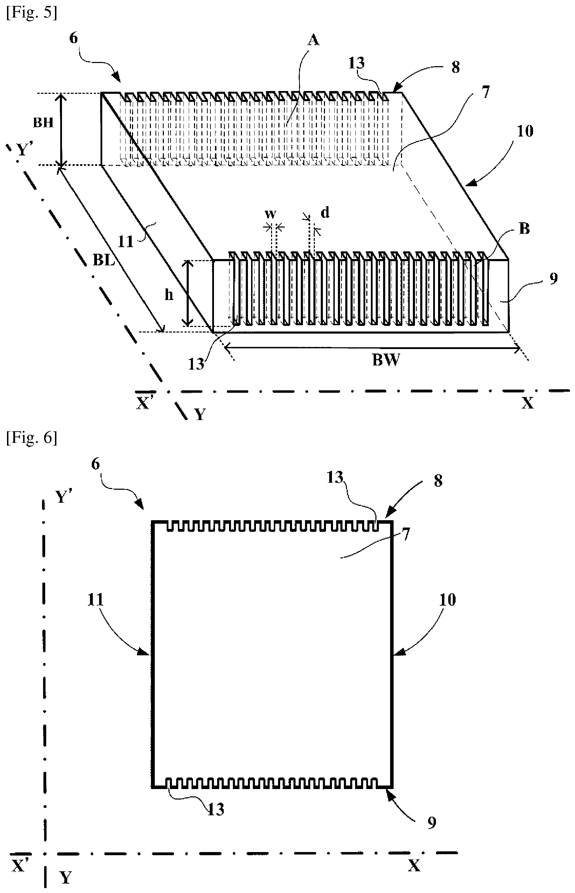

In the FIGs.3 and 5, the block has a block length extending in circumferential direction (BL: 25.4 mm), a block width extending in axial direction (BW: 23.8 mm) and a block height extending in radial direction (BH: 9.0 mm), the incisions have a depth (length) extending along the direction in which the incisions (12, 13) extend (d: 23.8 mm (12) or 0.8 mm (13)) and a height extending in radial direction (h: 9.0 mm), and the openings have an opening width extending perpendicular to the direction in which the incisions (12, 13) extend at the opening (w: 0.4 or 1.0 mm).

In the FIGs. 3 and 4, the block (6) is provided with two incisions (12) axially extending to be open at both of the lateral faces (10, 11), that is, the both sides of the incisions (12) being both side open incisions to the main grooves, wherein the opening width (w) is 0.4 or 1.0 mm. In the embodiment shown in FIGs. 3 and 4, the surface layer A comprises a portion of the block (6) exposed to the outside along the top surface (7), and the surface layer B comprises portions of the block (6) circumferentially facing to each of the incisions (12). Preferably, the surface layer B comprises the portions of the block (6) at the radial bottoms of the incisions (12).

In the FIGs. 5 and 6, the block (6) is provided with forty two incisions (13) at both of the frontal faces (8, 9), that is, twenty one incisions (13) at each of frontal faces (8, 9), the incisions (13) circumferentially extending to be open to one of the sub grooves, that is, the incisions (13) being one side open incisions, wherein the opening width (w) is 0.4 mm, wherein a ratio of the sum of the opening widths of the incisions (13) on each of the lateral faces (8, 9) to the block width (BW) is about 35%, wherein a ratio of the depth (d: 0.8 mm) of the block length (BL: 25.4 mm) is about 3.3%, and wherein a ratio of the height (h: 9.0 mm) to the block height (BH: 9.0 mm) is 100%. In the embodiment shown in the FIGs. 5 and 6, the surface layer A comprises a portion of the block (6) exposed to the outside along the top surface (7), and the surface layer B comprises portions of the block (6) axially facing to each of the incisions (13) and portions of the block (6) circumferentially facing to the incisions (13). Preferably, the surface layer B comprises portions of the block (6) at the circumferential bottoms of the incisions (13).

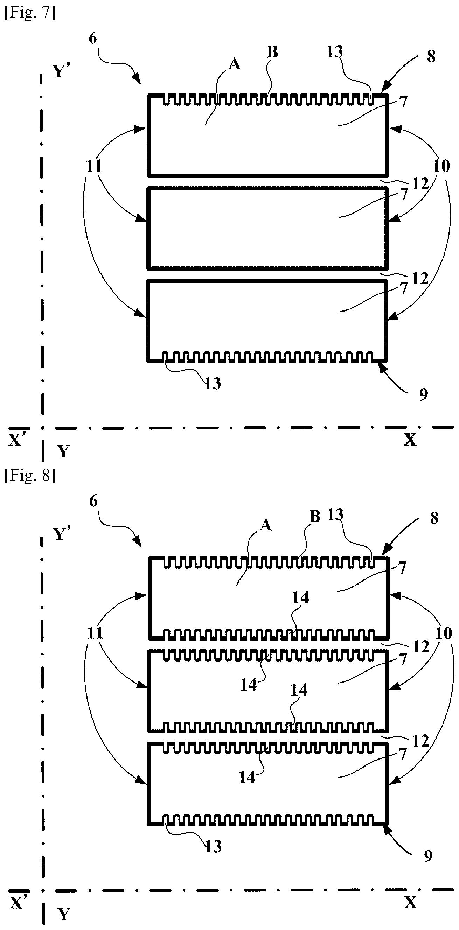

In the FIG. 7, comparing with the embodiment shown in the FIG.5 and 6, the block (6) is additionally provided with two incisions (12) which axially extend to be open to the main grooves at both of the lateral faces (10, 11), that is, the additional incisions (12) are both side open incisions, and wherein the opening width of the additional incisions (12) is 1.0 mm. In the embodiment shown in the FIG. 7, the surface layer B further comprises portions of the block (6) circumferentially facing to each of the additional incisions (12). Preferably, the surface layer B comprises the portions of the block at the radial bottoms of the additional incisions (12).

In the FIG. 8, comparing with the embodiment shown in the FIG.7, the block (6) is additionally provided with forty two incisions (14), which are one side open incisions, circumferentially extending to be open to each of the other incisions (12) axially extending to open at both of the lateral faces (10, 11), wherein total number of the incisions (14) is 82, and wherein the opening width of the additional incisions (14) is 0.4 mm. In the embodiment shown in the FIG. 8, the surface layer B further comprises portions of the block (6) axially facing to each of the incisions (14) and portions of the block (6) circumferentially facing to the incisions (14). Preferably, the surface layer B comprises the portions of the block at the radial bottoms of the additional incisions (14).

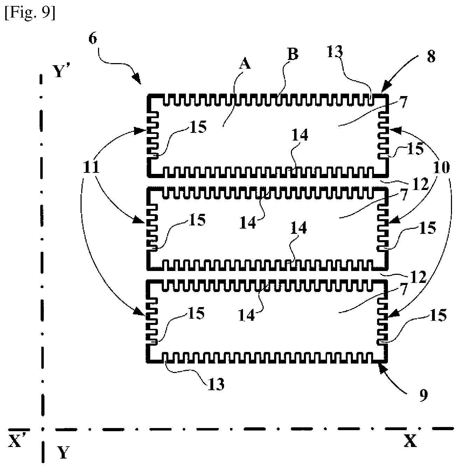

The FIG. 9 illustrates that, comparing with the embodiment shown in the FIG.8, the block (6) is additionally provided with thirty incisions (15) at both of the lateral faces (10, 11), that is, fifty incisions (15) at each of the lateral faces (10, 11), the incisions (15) axially extending to be open at one of the lateral face (10, 11), that is, the incisions (15) being one side open incisions, and wherein the opening width of the additional incisions (15) is 0.4 mm. In the embodiment shown in FIG. 9, the surface layer B further comprises portions of the block (6) circumferentially facing to each of the additional incisions (15), and portions of the block (6) axially facing to the additional incisions (15). Preferably, the surface layer B comprises the portions of the block at the axial bottoms of the additional incisions (15).

The invention is further illustrated by the following examples.

### Examples

In these tests, three block samples (identified as B-1 (a reference), B-2 and B-3 (examples according to the present invention)) comprising a rubber composition based on a diene elastomer (SBR/BR) are compared, and a formulation of the rubber composition (content of the various products in phr) is given in Table 1.

**[Table 1]**

| | Rubber composition |
|---|---|
| SBR (1) | 60 |
| BR (2) | 40 |
| Carbon black (3) | 100 |
| Non aromatic oil (4) | 30 |
| Hydrocarbon resin (5) | 40 |
| ZnO | 1.5 |
| Stearic acid | 3.0 |
| Sulphur | 1.4 |
| Accelerator (6) | 1.6 |

| | |
|---|---|
| (1) SBR: SBR (Sn star-branched) with 27% of styrene units and 24% of 1,2- units of the butadiene part bearing a silanol function at the end of the elastomer chain (Tg = - 48°C); (2) BR with 0.3% of 1,2 vinyl; 2.7% of trans; 97% of cis-1,4 (Tg = -105°C); (3) ASTM grade N234 (Cabot) (4) Oleic sunflower oil ("Agripure 80" from Cargiil, Weight percent oleic acid: 100%); (5) Hydrocarbon resin C5/C9 type ("Escorez ECR-373" from Exxon); (6) N-dicyclohexyl-2-benzothiazolesulphenamide ("Santocure CBS" from Flexsys). | |

The diene elastomer(s), the reinforcing filler and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasted in total approximately 3 to 4 minutes, until a maximum "dropping" temperature of 165°C was reached. The mixture thus obtained was recovered and cooled and then sulphur and an accelerator of sulphenamide type were incorporated into an external mixer (homofinisher) at 30°C, everything being mixed (productive phase) for an appropriate time (for example between 5 and 12 min).

The composition thus obtained was subsequently calendered, either in the form of sheets (for example, thickness: 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

Each of the three block samples has a block design having a plurality of incisions as shown in Table 2.

**[Table 2]**

| | Reference | Examples according to the present invention | |
|---|---|---|---|
| | B1 | B2 | B3 |
| Figure | Fig.4 | Fig.4 | Fig.9 |
| Width of both sides open incision (mm) | 1.0 | 1.0 | 1.0 |
| Width of one side open incision (mm) | - | - | 0.4 |

The surface layers A and B consisted of the rubber composition composing each of the three block samples before a treatment mentioned in detailed below.

Subsequently, after curing, the treatment was performed on the wall faces and also the radial, circumferential or axial bottoms of the incisions (12, 13, 14, 15) in each of the examples (B-2 and B-3) according to the present invention. The treatment was to immerse the block samples of the examples (B-2 and B-3) in a solution comprising 3% by weight of trichloroisocyanuric acid (as a functionalizing agent) per 100% by weight of the solution comprising ethyl acetate (as an anhydrous solvent) for 900 seconds and then to dry the block samples once, and then to immerse the block samples in a mixed solvent comprising 10% by weight of water and 90% by weight of ethyl acetate per 100% by weight of the mixed solvent for 900 seconds, and then dry the block samples again. During the treatment, the top faces in each of the examples were covered with a carbon tape as a masking material, and the temperature was about 20°C.

Atomic percentages of carbon, nitrogen, oxygen, sulphur, chlorine (as a halogen atom) and silica in the surface layer A and the surface layer B of the three block samples after the above treatment by X-ray photoelectron spectroscopy (XPS) are shown in Table 3.

Table 3 indicates each of the atomic percentages of oxygen and chlorine (also, nitrogen) in the surface layer B comprising the wall faces, where the above treatment was implemented, and then the surface layer B of the examples (B-2 and B-3) was oxidated, halogenated (chlorinated), and further nitrided, and the diene elastomer(s) in the rubber composition of the surface layer B might be functionalized with oxygen and halogen (chlorine) atoms, and further nitrogen atom(s), is higher than that in the surface layer A.

**[Table 3]**

| | | Reference | | Examples according to the present invention | | | |
|---|---|---|---|---|---|---|---|
| | | B-1 | | B-2 | | B-3 | |
| Surface layer | | A | B | A | B | A | B |
| Atomic percentages measured by XPS in each surface layer (%) | C | 91.68 | 91.68 | 91.68 | 76.83 | 91.68 | 76.83 |
| | N | 0.00 | 0.00 | 0.00 | 4.72 | 0.00 | 4.72 |
| | O | 5.59 | 5.59 | 5.59 | 12.78 | 5.59 | 12.78 |
| | S | 2.53 | 2.53 | 2.53 | 0.00 | 2.53 | 0.00 |
| | Cl | 0.00 | 0.00 | 0.00 | 5.67 | 0.00 | 5.67 |
| | Si | 0.00 | 0.00 | 0.00 | 0.00 | 0.00 | 0.00 |

Friction coefficients on ice for the three block samples are given in Table 5, a value greater than that of the reference (B-1), arbitrarily set at 100, indicating an improved result, i.e. an aptitude for a shorter braking distance. The principle is based on a block sample that slides at a given speed (for example equal to 5 km/h) over an ice track (temperature of the ice set at -2°C) with an imposed load (for example equal to 3 kg/cm ²). The forces generated in the direction of travel (Fx) of the pad and perpendicular to the travel (Fz) are measured; the ratio Fx/Fz determines the friction coefficient of the test specimen on ice. The principle of this test is well known to person skilled in the art (see for example Patent Applications EP 1 052 270, EP 1 505 112 and WO 2010/009850). That makes it possible to evaluate, under representative conditions, the grip on melting ice that would be obtained during a running test on a vehicle equipped with tires whose tread consists of the same rubber compositions.

The results from Table 4 demonstrate that the examples (B-2 and B-3) in which the surface layer B exhibits higher atomic percentages of oxygen and chlorine than those in the surface layer A, which have surely improved friction coefficient on ice rather than the reference and the comparative example.

**[Table 4]**

| | Reference | Examples according to the present invention | |
|---|---|---|---|
| | B-1 | B-2 | B-3 |
| Melting ice grip index | 100 | 134 | 146 |

## Claims

1. A tire (1) which has a tread (2) having a contact surface (3) intended to come into contact with ground during rolling, the tread (2) comprising one or more of main grooves (4) circumferentially extending, a plurality of sub grooves (5) axially extending, and a plurality of blocks (6) delimited by the main grooves (4) and the sub grooves (5); the blocks (6) respectively having a top face (7) forming the contact surface (3) of the tread (2), two frontal faces (8, 9) axially extending and respectively facing to one of the sub grooves (5), and two lateral faces (10, 11) circumferentially extending and respectively facing to one of the main grooves (4), the blocks (6) also having a block width (BW), a block length (BL) and a block height (BH), the blocks (6) respectively provided with one or more of incisions (12, 13, 14, 15), the tire (1), being **characterized in that**:
each of the blocks (6) comprises surface layer A extending along the top face (7), and surface layer B extending along at least a wall face laterally facing to each of the incisions (12, 13, 14, 15);
each of the atomic percentages of oxygen and halogen atoms in the surface layer B is higher than those in the surface layer A, as measured by XPS (X-ray photoelectron spectroscopy), the atomic percentages being based on the total amount of carbon, nitrogen, oxygen, sulphur, halogen and silica atoms.

2. The tire (1) according to Claim 1, wherein the atomic percentage of oxygen in the surface layer B is higher than that in the surface layer A by more than 2.0%, and the atomic percentage of halogen atom(s) in the surface layer B is higher than that in the surface layer A by more than 1.0%, preferably the atomic percentage of oxygen in the surface layer B is higher than 6.0%, and the atomic percentage of halogen atom(s) in the surface layer B is higher than 3.0%.

3. The tire (1) according to Claim 1 or Claim 2, wherein the atomic percentage of nitrogen in the surface layer B is higher than that in the surface layer A by more than 1.0%, preferably the atomic percentage of nitrogen in the surface layer B is higher than 1.5%.

4. The tire (1) according to any one of Claims 1 to 3, wherein the incisions (12, 13, 14, 15) include one or more of the incisions (12, 13, 14, 15) respectively extending to form opening(s) to the sub groove(s) (5) at the frontal face(s) (8, 9) or to the main groove(s) (4) at the lateral face(s) (10, 11), and wherein each of the opening(s) has an opening width (w).

5. The tire (1) according to Claim 4, wherein the incisions (12, 13, 14, 15) include one or more of the incisions (12) axially extending to be open at both of the lateral faces (10, 11).

6. The tire (1) according to Claim 4, wherein the incisions (12, 13, 14, 15) include a plurality of the incisions (13) circumferentially extending to be open to one of the sub grooves (5) at one or both, preferably both, of the frontal faces (8, 9), and wherein a ratio of the sum of the opening widths (w) of the incisions (13) on each of the frontal faces (8, 9) to the block width (BW) is between 10% and 60%.

7. The tire (1) according to Claim 6, wherein the incisions (12, 13, 14, 15) include one or more of additional incisions (12) axially extending to be open at both of the lateral faces (10, 11).

8. The tire (1) according to Claim 7, wherein the incisions (12, 13, 14, 15) include a plurality of the incisions (14) circumferentially extending to be open to one of the additional incisions (12) at one of wall faces of the additional incisions (12).

9. The tire (1) according to Claim 8, wherein the incisions (12, 13, 14, 15) include a plurality of the incisions (15) at one or both of the lateral faces (10, 11), the incisions (15) axially extending to be open at one of the lateral faces (10, 11).

10. The tire (1) according to any one of Claims 4 to 9, wherein the opening width (w) is between 0.1 and 3.0 mm.

11. The tire (1) according to any one of Claims 1 to 10, wherein the surface layer B has a thickness which is from 1 nm to 10 nm.

12. The tire (1) according to any one of Claims 1 to 11, wherein each of the blocks (6) comprises the surface layer B oxidated and halogenated.

13. The tire (1) according to Claim 12, wherein the surface layer A consists of a rubber composition, and wherein the surface layer B consists of the rubber composition before oxidation and halogenation of the surface layer B, preferably each of the blocks (6) consists of the rubber composition before the oxidation and the halogenation of the surface layer B.

14. The tire (1) according to Claim 13, wherein the rubber composition comprises at least a diene elastomer and a reinforcing filler.

15. The tire (1) according to Claims 1 to 14, wherein the halogen atom(s) are selected from the group consisting of chlorine, bromine, iodine and the mixtures thereof, preferably selected from the group consisting of chlorine, bromine and the mixtures thereof, are more preferably chlorine.

## Patentansprüche

1. Reifen (1), der eine Lauffläche (2) aufweist, die eine Kontaktoberfläche (3) aufweist, die dazu bestimmt ist, beim Rollen mit dem Boden in Kontakt zu kommen, wobei die Lauffläche (2) eines oder mehr von sich umfänglich erstreckenden Hauptrillen (4), eine Vielzahl von sich axial erstreckenden Unterrillen (5) und eine Vielzahl von Blöcken (6) umfasst, die durch die Hauptrillen (4) und die Unterrillen (5) begrenzt sind;
wobei die Blöcke (6) jeweils eine Oberseite (7), die die Kontaktoberfläche (3) der Lauffläche (2) bildet, zwei sich axial erstreckende und jeweils einer der Unterrillen (5) zugewandte Vorderseiten (8, 9) und zwei sich umfänglich erstreckende und jeweils einer der Hauptrillen (4) zugewandte laterale Seiten (10, 11) aufweisen, die Blöcke (6) auch eine Blockbreite (BW), eine Blocklänge (BL) und eine Blockhöhe (BH) aufweisen, die Blöcke (6) jeweils mit einem oder mehreren Einschnitten (12, 13, 14, 15) versehen sind, wobei der Reifen (1) **dadurch gekennzeichnet ist, dass**:
jeder der Blöcke (6) Oberflächenschicht A umfasst, die sich entlang der Oberseite (7) erstreckt, und Oberflächenschicht B, die sich entlang mindestens einer lateral jedem der Einschnitte (12, 13, 14, 15) zugewandten Wandseite erstreckt;
jeder der Atomprozentsätze an Sauerstoff- und Halogenatomen in der Oberflächenschicht B, wie durch XPS (Röntgenphotoelektronenspektroskopie) gemessen, höher als jene in der Oberflächenschicht A ist, wobei die Atomprozentsätze auf der Gesamtmenge an Kohlenstoff-, Stickstoff-, Sauerstoff-, Schwefel-, Halogen- und Siliciumoxidatomen basiert.

2. Reifen (1) nach Anspruch 1, wobei der Atomprozentsatz an Sauerstoff in der Oberflächenschicht B um mehr als 2,0 % höher als jener in der Oberflächenschicht A ist, und der Atomprozentsatz an Halogenatom(en) in der Oberflächenschicht B um mehr als 1,0 % höher als jener in der Oberflächenschicht A ist, der Atomprozentsatz an Sauerstoff in der Oberflächenschicht B vorzugsweise höher als 6,0 % ist, und der Atomprozentsatz an Halogenatom(en) in der Oberflächenschicht B höher als 3,0 % ist.

3. Reifen (1) nach Anspruch 1 oder Anspruch 2, wobei der Atomprozentsatz an Stickstoff in der Oberflächenschicht B um mehr als 1,0 % höher als jener in der Oberflächenschicht A ist, der Atomprozentsatz an Stickstoff in der Oberflächenschicht B vorzugsweise höher als 1,5 % ist.

4. Reifen (1) nach einem der Ansprüche 1 bis 3, wobei die Einschnitte (12, 13, 14, 15) einen oder mehr der Einschnitte (12, 13, 14, 15) beinhaltet, die sich jeweils erstrecken, um (eine) Öffnung(en) zu der (den) Unterrille(n) (5) an der (den) Vorderseite (n) (8, 9) oder zu der (den) Hauptrille(n) (4) an der (den) lateralen Seite(n) (10, 11) zu bilden, und wobei jede der Öffnung(en) eine Öffnungsbreite (w) aufweist.

5. Reifen (1) nach Anspruch 4, wobei die Einschnitte (12, 13, 14, 15) eine oder mehr der sich axial erstreckenden Einschnitte (12) beinhaltet, um an beiden der lateralen Seiten (10, 11) offen zu sein.

6. Reifen (1) nach Anspruch 4, wobei die Einschnitte (12, 13, 14, 15) eine Vielzahl von sich umfänglich erstreckenden Einschnitten (13) beinhalten, um zu einer der Unterrillen (5) an einer oder beiden, vorzugsweise beiden, der Vorderseiten (8, 9) offen zu sein, und wobei ein Verhältnis der Summe der Öffnungsbreiten (w) der Einschnitte (13) an jeder der Vorderseiten (8, 9) zur Blockbreite (BW) zwischen 10 % und 60 % beträgt.

7. Reifen (1) nach Anspruch 6, wobei die Einschnitte (12, 13, 14, 15) einen oder mehrere zusätzliche sich axial erstreckende Einschnitte (12) beinhalten, um an beiden der lateralen Seiten (10, 11) offen zu sein.

8. Reifen (1) nach Anspruch 7, wobei die Einschnitte (12, 13, 14, 15) eine Vielzahl der sich umfänglich erstreckenden Einschnitte (14) beinhalten, um zu einer der zusätzlichen Einschnitte (12) an einer der Wandseiten der zusätzlichen Einschnitte (12) offen zu sein.

9. Reifen (1) nach Anspruch 8, wobei die Einschnitte (12, 13, 14, 15) eine Vielzahl von Einschnitten (15) an einer oder beiden der lateralen Seiten (10, 11) beinhalten, wobei sich die Einschnitte (15) axial erstrecken, um an einer der lateralen Seiten (10, 11) offen zu sein.

10. Reifen (1) nach einem der Ansprüche 4 bis 9, wobei die Öffnungsbreite (w) zwischen 0,1 und 3,0 mm beträgt.

11. Reifen (1) nach einem der Ansprüche 1 bis 10, wobei die Oberflächenschicht B eine Dicke aufweist, die von 1 nm bis 10 nm beträgt.

12. Reifen (1) nach einem der Ansprüche 1 bis 11, wobei jeder der Blöcke (6) die Oberflächenschicht B umfasst, die oxidiert und halogeniert ist.

13. Reifen (1) nach Anspruch 12, wobei die Oberflächenschicht A aus einer Gummizusammensetzung besteht und wobei die Oberflächenschicht B aus der Gummizusammensetzung vor der Oxidierung und Halogenierung der Oberflächenschicht B besteht, vorzugsweise jeder der Blöcke (6) aus der Gummizusammensetzung vor der Oxidierung und Halogenierung der Oberflächenschicht B besteht.

14. Reifen (1) nach Anspruch 13, wobei die Gummizusammensetzung mindestens ein Dien-Elastomer und einen Verstärkerfüllstoff umfasst.

15. Reifen (1) nach den Ansprüchen 1 bis 14, wobei das (die) Halogenatom(e) aus der Gruppe ausgewählt wird (werden), das (die) aus Chlor, Brom, und Mischungen davon besteht, bevorzugter Chlor sind.

## Revendications

1. Pneumatique (1) qui comporte une bande de roulement (2) présentant une surface de contact (3) destinée à venir en contact avec le sol durant le roulement, la bande de roulement (2) comprenant une ou plusieurs de rainures principales (4) s'étendant circonférentiellement, une pluralité de sous-rainures (5) s'étendant axialement, et une pluralité de blocs (6) délimités par les rainures principales (4) et les sous-rainures (5) ;
les blocs (6) présentant respectivement une face supérieure (7) formant la surface de contact (3) de la bande de roulement (2), deux faces frontales (8, 9) s'étendant axialement et faisant respectivement face à l'une des sous-rainures (5), et deux faces latérales (10, 11) s'étendant circonférentiellement et faisant respectivement face à l'une des rainures principales (4), les blocs (6) présentant également une largeur de bloc (BW), une longueur de bloc (BL) et une hauteur de bloc (BH), les blocs (6) étant respectivement pourvus d'une ou plusieurs d'incisions (12, 13, 14, 15), le pneumatique (1) étant **caractérisé en ce que** :
chacun des blocs (6) comprend une couche de surface A s'étendant le long de la face supérieure (7), et une couche de surface B s'étendant le long d'au moins une face de paroi faisant latéralement face à chacune des incisions (12, 13, 14, 15) ;
chacun des pourcentages atomiques d'atomes d'oxygène et d'halogène dans la couche de surface B est plus élevé que ceux dans la couche de surface A, tel que mesuré par XPS (spectroscopie photoélectronique à rayons X), les pourcentages atomiques étant basés sur la quantité totale d'atomes de carbone, d'azote, d'oxygène, de soufre, d'halogène et de silice.

2. Pneumatique (1) selon la revendication 1, dans lequel le pourcentage atomique d'oxygène dans la couche de surface B est supérieur à celui dans la couche de surface A de plus de 2,0 %, et le pourcentage atomique d'atome(s) d'halogène dans la couche de surface B est supérieur à celui dans la couche de surface A de plus de 1,0 %, de préférence le pourcentage atomique d'oxygène dans la couche de surface B est supérieur à 6,0 %, et le pourcentage atomique d'atome(s) d'halogène dans la couche de surface B est supérieur à 3,0 %.

3. Pneumatique (1) selon la revendication 1 ou la revendication 2, dans lequel le pourcentage atomique d'azote dans la couche de surface B est supérieur à celui dans la couche de surface A de plus de 1,0 %, de préférence le pourcentage atomique d'azote dans la couche de surface B est supérieur à 1,5 %.

4. Pneumatique (1) selon l'une quelconque des revendications 1 à 3, dans lequel les incisions (12, 13, 14, 15) incluent une ou plusieurs des incisions (12, 13, 14, 15) s'étendant respectivement pour former une(des) ouverture(s) sur la(les) sous-rainure(s) (5) au niveau de la(des) face(s) frontale (s) (8, 9) ou sur la(les) rainure(s) (4) au niveau de la(des) face(s) latérale(s) (10, 11), et dans lequel chacune de la(des) ouverture(s) présente une largeur d'ouverture (w).

5. Pneumatique (1) selon la revendication 4, dans lequel les incisions (12, 13, 14, 15) incluent une ou plusieurs des incisions (12) s'étendant axialement pour être ouvertes au niveau des deux faces latérales (10, 11) .

6. Pneumatique (1) selon la revendication 4, dans lequel les incisions (12, 13, 14, 15) incluent une pluralité des incisions (13) s'étendant circonférentiellement pour être ouvertes sur l'une des sous-rainures (5) au niveau d'une ou des deux, de préférence des deux, des faces frontales (8, 9), et dans lequel un rapport de la somme des largeurs d'ouverture (w) des incisions (13) sur chacune des faces frontales (8, 9) sur la largeur de bloc (BW) est entre 10 % et 60 %.

7. Pneumatique (1) selon la revendication 6, dans lequel les incisions (12, 13, 14, 15) incluent une ou plusieurs d'incisions supplémentaires (12) s'étendant axialement pour être ouvertes au niveau des deux faces latérales (10, 11).

8. Pneumatique (1) selon la revendication 7, dans lequel les incisions (12, 13, 14, 15) incluent une pluralité des incisions (14) s'étendant circonférentiellement pour être ouvertes sur l'une des incisions supplémentaires (12) au niveau d'une des faces de paroi des incisions supplémentaires (12).

9. Pneumatique (1) selon la revendication 8, dans lequel les incisions (12, 13, 14, 15) incluent une pluralité des incisions (15) au niveau d'une ou des deux des faces latérales (10, 11), les incisions (15) s'étendant axialement pour être ouvertes au niveau de l'une des faces latérales (10, 11).

10. Pneumatique (1) selon l'une quelconque des revendications 4 à 9, dans lequel la largeur d'ouverture (w) est entre 0,1 et 3,0 mm.

11. Pneumatique (1) selon l'une quelconque des revendications 1 à 10, dans lequel la couche de surface B présente une épaisseur qui va de 1 nm à 10 nm.

12. Pneumatique (1) selon l'une quelconque des revendications 1 à 11, dans lequel chacun des blocs (6) comprend la couche de surface B oxydée et halogénée.

13. Pneumatique (1) selon la revendication 12, dans lequel la couche de surface A est constituée d'une composition de caoutchouc, et dans lequel la couche de surface B est constituée de la composition de caoutchouc avant oxydation et halogénation de la couche de surface B, de préférence chacun des blocs (6) est constitué de la composition de caoutchouc avant l'oxydation et l'halogénation de la couche de surface B.

14. Pneumatique (1) selon la revendication 13, dans lequel la composition de caoutchouc comprend au moins un élastomère diène et une charge de renforcement.

15. Pneumatique (1) selon les revendications 1 à 14, dans lequel le(s) atome(s) d'halogène est(sont) sélectionné(s) à partir du groupe consistant en du chlore, du brome, de l'iode et les mélanges de ceux-ci, de manière préférée sélectionné(s) à partir du groupe consistant en du chlore, du brome et les mélanges de ceux-ci, est(sont) de manière davantage préférée du chlore.
